Europäisches Patentamt

European Patent Office

Office européen des brevets

(11) Publication number: **0 238 237**
**A2**

(12) **EUROPEAN PATENT APPLICATION**

(21) Application number: **87301941.8**

(22) Date of filing: **05.03.87**

(51) Int. Cl.⁴: **C08L 59/00** , **C08L 33/02** , **C08K 5/34**

(30) Priority: **14.03.86 JP 56553/86**

(43) Date of publication of application:
**23.09.87 Bulletin  87/39**

(84) Designated Contracting States:
**AT BE CH DE ES FR GB GR IT LI LU NL SE**

(71) Applicant: **POLYPLASTICS CO. LTD.**
**30 Azuchimachi 2-chome**
**Higashi-ku Osaka-shi(JP)**

(72) Inventor: **Minamisawa, Tsuyoshi**
**36-6, Kamo**
**Mishima-shi Shizuoka(JP)**
Inventor: **Endo, Katsunori**
**412-108, Gokanjima**
**Fuji-shi Shizuoka(JP)**

(74) Representative: **Livsey, Gilbert Charlesworth**
**Norris et al**
**HYDE, HEIDE & O'DONNELL 146 Buckingham**
**Palace Road**
**London SW1W 9TR(GB)**

(54) **Polyacetal composition.**

(57) A polyacetal composition comprises a polyacetal and an ionomer and is improved in degradation during the moulding step. An organic, nitrogen-containing compound may be further contained.

EP 0 238 237 A2

# POLYACETAL COMPOSITION

The present invention relates to novel polyacetal resin compositions which have been improved in their residence discolouration resistance, etc., in manufacturing machines, which should be considered as a factor, when moulding polyacetal resins. More particularly, it pertains to resin compositions of polyacetal resins mixed with ionomers or ionomers and nitrogen-containing organic compounds.

The polyacetal resins are finding uses in various industrial fields including automobiles, electric equipment, etc., because of their balanced mechanical properties, excellent friction and wear resistances, excellent heat resistance and similar characteristics.

Statement of Prior Arts

Polyacetal resins not only have their terminations subjected to stabilizing treatments, but are prevented from decomposition by addition of antioxidants and thermal stabilizers.

As the antioxidants to be added to polyacetal resins, there have been proposed steric hindrant phenol compounds, and as other thermal stabilizers, polyamide resins, urea derivatives, hydrazine compounds, amidin compounds, hydroxides of alkali or alkali-earth metals, and salts of organic or inorganic acids, etc. Polyacetal resin compositions mixed with these agents are disadvantageous in that they are discoloured yellowish brown under the actions of heat and oxygen in the cylinder of manufacturing machines. And when large numbers of pieces are moulded for long, fine powdery matter will adhere on the inside surface of the mould, thereby depriving the moulded product surfaces of luster. Remedies to these disadvantages have been ardently sought.

Summary of the Invention

In view of the above described situation, the present inventors pursued assiduous studies in an effort to improve such properties as discolouration resistance, etc., of the resin composition placed in the cylinder of manufacturing machines and, as a result, have found that polyacetal resin compositions comprising polyacetal resins mixed with ionomers can serve this end and that resin compositions comprising polyacetal resins mixed with the aforementioned ionomers and nitrogen-containing organic compounds can effectively achieve the objective through their synergistic effect, which findings have led to the establishment of this invention.

Thus the present invention provides polyacetal resin compositions comprising polyacetal resins mixed with ionomers and nitrogen-containing organic compounds.

The ionomers used according to this invention have a basic structure in which molecular chains are bridged by metal ions at part of carboxyl groups of olefin copolymers formed by copolymerization olefins such as ethylene, propylene, etc., with carboxylic acids such as acrylic, methacrylic, maleic, itaconic acids, etc., and include those formed by their copolymerization with other comonomers. As metal ions, mono-tri-valent ones, e.g., $Na^+$, $K^+$, $Ag^+$, $C^{2+}$, $Ba^{2+}$, $Zn^{2+}$, $Fe^{2+}$, $Mg^{2+}$, etc., may be mentioned; and especially, $Ca^{2+}$, $Zn^{2+}$, and $Mg^{2+}$ excel in discolouration resistance and amelioration of mould deposit. As ionomers, especially, copolymers of ethylene with metal salts of methacrylic acids. They include, for example, HI-MILAN (manufactured by Mitsui Du Pont PolyChemical Co.) and SURLYN (Du Pont De Nemours & Co.) etc.

As nitrogen-containing organic compounds used according to this invention, there may be mentioned amidin compounds such as melamine and its derivatives, etc., hydrazine compounds, amide compounds, polyamide resins, urea and urea derivatives, etc., of which melamine and its derivatives are particularly favourable.

The polyacetal resins employed according to this invention are polymers obtained by homopolymerization of formaldehyde or trioxane or tetraoxane (being cyclic oligomers of the former), or by copolymerization of these compounds with comonomers which are copolymerizable therewith, with their terminations stabilized by esterification or urethanization, or by decomposing unstable terminations in the case of copolymers.

The contents of the ionomers in the compositions of this invention should 0.01 -25 parts by weight to 100 parts by weight of acetal resins, preferably, 0.05 -2 parts by weight , 0.1 -1.0 part by weight being particularly favourable. If this content is smaller than 0.01 part by weight, the effect of improving residence discolouration resistance, etc., is not achieved, but if it exceeds 25% by weight, excellent mechanical properties of the resin compositions will be impaired.

The contents of the nitrogen-containing organic compounds in the compositions of this invention should be larger than 0.001 part by weight to 100 parts by weight of polyacetal resin, preferably, 0.03 -0.7 parts by weight.

Into the compositions of this invention, well known additives, e.g., antioxidants, photostablizers, lubricants, nucleators, mould releasing agents, antistatic agents, other surface active agents, pigments, etc., may be added, or one or two or more species of inorganic or organic fibrous, powdery or granular, or plate shape fillers may be added, as required.

The polyacetal resin compositions of this invention may be readily prepared by well-known methods. For example, by the commonly used melt-mixing process, the mixing of polyacetal resins with ionomers, etc., may be effected. Actually, ionomers are pulverized and the fine powders are preblended with polyacetal resins and then, pelletized by extrusion.

(Effects of the Invention)

In the polyacetal resin compositions of this invention, their moulding properties, especially residence discolouration resistance, are greatly improved, without impairing their excellent mechanical properties and other physical properties. To be sure, they have effects of ameliorating other moulding properties, for example, thermal decomposition resistance of resins and preventing the decomposed products from adhering on the mould.

(Preferred Embodiments)

In the following, this invention will be described further, in detail, in connection with embodiments thereof, but it is not anyway bound by them.

The residence discolouration resistance of the resin compositions was evaluated by the method mentioned below: [Method of evaluation of residence discolouration]:

After leaving the test sample resin composition residing in an extrusion moulder at 210°C for 1 hr, a 50 x 50mm plate was moulded and its b-value (yellowing degree) was measured, using a colorimetric colour difference meter manufactured by Nihon Denshoku Kogyo K.K. The differences of b-values (Δb-value) measured of test samples before and after the heat treatment were compared.

Examples 1 -4 and Comparison Examples 1 -2

Into 100 parts by weight of copolymer (Co) of trioxane and ethylene oxide, or polyacetal homopolymer - (Ho), acetylated at its terminations, an ionomer (HI-MILAN, manufactured by Mitsui Du Pont Chemical Co.), or this ionomer and nitrogen-containing organic compounds in the amounts shown in Table 1 were added and further, an antioxidant pentaerythrityl-tetrakis 3-(3,5-di-t-butyl-4-hydroxy phenyl) propionate (Trade name Irganox-1010) was mixed with this resin mix and the mixture was pelletized by extrusion at 200°C. The product after drying at 100°C for 3 hr was put to the residence discolouration test.

The results are shown in Table 1:

3

Table 1

| | Type of *1 Polyacetal | Stabilizer | Amount Added | Residence Discolouration (Δb-value) |
|---|---|---|---|---|
| Example 1 | Co | Ionomer | 0.5 | 1.0 |
| Example 2 | Co | Ionomer Melamine | 0.2 0.3 | 0.30 |
| Example 3 | Co | Ionomer Polyamide*2 | 0.3 0.3 | 0.55 |
| Example 4 | Ho | Ionomer Melamine | 0.15 0.3 | 0.43 |
| Comparison Example 1 | Co | Melamine | 0.3 | 2.5 |
| Comparison Example 2 | Co | Polyamide | 0.3 | 4.0 |

Notes: *1   Co represents copolymer, and Ho homopolymer.

*2   Polyamide is ternary copolymer of nylon-12.

Table 1 clearly shows that polyacetal resins each having an ionomer or an ionomer and nitrogen-containing organic compound contained therein gave outstanding improvements in residence discolouration resistance, as compared with those with no addition of ionomer.

**Claims**

1. A polyacetal composition which comprises a polyacetal and an ionomer.

2. A composition as claimed in Claim 1, which comprises 100 parts by weight of the polyacetal and 0.01 to 25 parts by weight of the ionomer.

3. A composition as claimed in Claim 1 or 2, in which said ionomer has a metal ion selected from calcium, zinc or magnesium.

4. A composition as claimed in Claim 2, which further comprises 0.001 to 0.7 part by weight of an organic, nitrogen-containing compound.

5. A composition as claimed in Claim 1 or 2, in which said ionomer is a copolymer of ethylene with metal salts of methacrylic acids.

6. A composition as claimed in Claim 4, in which said organic, nitrogen-containing compound is melamine and melamine derivatives.

7. A composition as claimed in Claims 1 and 2, in which said polyacetal comprises formaldehyde polymer with stabilized terminations.